# EUROPÄISCHE PATENTSCHRIFT

(11) **EP 1 901 467 B1**
(45) Veröffentlichungstag und Bekanntmachung des Hinweises auf die Patenterteilung: **01.08.2012**
(21) Anmeldenummer: 07017961.9
(22) Anmeldetag: 13.09.2007
(51) Int. Cl.: H04K 1/02, H04L 29/06

(54) **Verfahren und System zur Übertragung von vertraulichen und nicht vertraulichen Daten**
Method and system for transmission of confidential and non-confidential data
Procédé et système destinés à la transmission de données sécurisées et non sécurisées

(30) Priorität: 15.09.2006 AT 15482006
(43) Veröffentlichungstag der Anmeldung: 19.03.2008
(73) Patentinhaber: FREQUENTIS NACHRICHTENTECHNIK GESELLSCHAFT m.b.H., 63225 Langen (DE)
(72) Erfinder: Mohnl, Gerald, Dipl.-Ing., 3435 Zwentendorf (AT); Fuchsgruber, Rupert, Dipl.-Ing., 3400 Klosterneuburg (AT)
(74) Vertreter: Wildhack & Jellinek

(56) Entgegenhaltungen:
- EP-A- 0 021 387
- DE-A1- 3 533 787
- US-A- 3 715 508

## Beschreibung

Die Erfindung betrifft ein Verfahren gemäß dem Oberbegriff des Patentanspruches 1 und ein Kommunikationssystem gemäß dem Oberbegriff des Patentanspruches 8.

Eine derartige Vorgangsweise bzw. ein dafür geeignetes Kommunikationssystem ist aus der EP 0021387 bekannt.

Aus der US-A-3715508 ist ein Kommunikationssystem zur Übertragung von Datensätzen zwischen mehreren Gruppen von Eingabe- und Ausgabeeinheiten bekannt. Dieses System weist eine Verteilungseinheit auf, die Datensätze einer Gruppe von Eingabeeinheiten und die entsprechenden Ausgabeeinheiten für die gleiche Gruppen von Datensätzen verbinden kann. Bei diesem bekannten System werden die Datensätze in Form von orthogonalen Sequenzen weitergeleitet und damit während ihrer Weiterleitung unterschieden.

Benutzer von Kommunikationssystemen, insbesondere Benutzer militärischer Kommunikationssysteme, müssen mit verschiedenen Teilnehmern und Organisationen kommunizieren, die eine unterschiedliche Vertrauenswürdigkeit besitzen. Vertrauliche Informationen die zwischen vertrauenswürdigen Teilnehmern bzw. Parteien ausgetauscht wird, darf niemals zu nicht vertrauenswürdigen Parteien gelangen bzw. von diesen mitgehört oder verändert werden. Der übliche Systemansatz zur Sicherstellung dieser Vertrauenswürdigkeit innerhalb eines Kommunikationssystems besteht darin, den Benutzern jeweils zwei physikalisch getrennte Systeme mit unterschiedlichen Bediengeräten für vertrauenswürdige und nicht vertrauenswürdige Informationen zur Verfügung zu stellen. Diese Vorgangsweise ist oftmals nicht ausreichend.

Ziel der Erfindung ist es, auf einfache Weise sicherzustellen, dass vertrauliche Informationen nicht an Teilnehmer gelangen, deren Berechtigung sich auf die Entgegennahme von nicht vertraulichen Informationen beschränkt. Im Zuge der Übertragung der Informationen soll auch verhindert werden, dass aufgrund von zufälligen oder bewusst herbeigeführten Übertragungsfehlern, z.B. durch Manipulation, vertrauliche Informationen an Teilnehmer übermittelt werden, die zur Entgegennahme dieser Informationen nicht berechtigt sind.

Diese Ziele werden bei einem Verfahren der eingangs genannten Art durch die im Kennzeichen des Anspruches 1 angeführten Merkmale erreicht.

Ein Kommunikationssystem der eingangs genannten Art ist durch die im Kennzeichen des Anspruches 8 angeführten Merkmale charakterisiert.

Das erfindungsgemäße Verfahren stellt bei einfacher Vorgangsweise und einfachem Aufbau des Systems die ausreichende Trennung von vertraulicher und nicht vertraulicher Information innerhalb eines einzigen bzw. des erstellten Kommunikationssystems sicher. Das Wesen der Erfindung besteht darin, dass vertrauliche Information von nicht vertraulicher Information getrennt wird und vorteilhafterweise durch entsprechende unterschiedliche, leicht bzw. eindeutig erkennbare Markierung der Datensätze bzw. durch eine eindeutige Markierung einer der beiden Informationen, vorzugsweise der vertraulichen Information, jederzeit unterscheidbar ist. Eine Beeinflussung der zu übertragenden Daten durch das additive Datensignal kann mit Sicherheit ausgeschlossen werden und die Markierung kann rasch sowie betriebssicher und leicht erkennbar erfolgen.

Die Erfindung betrifft somit die Übertragung von unterschiedlich zu bewertenden Datensätzen, die auseinander zu halten bzw. unterschiedlich zu behandeln und weiterzuleiten sind. Auf den tatsächlichen Inhalt der Datensätze kommt es nicht an; die eine Art der zu übertragenden Datensätze sind "vertrauliche" Datensätze, die andere Art der Datensätze sind "nicht vertrauliche" Datensätze.

Im Folgenden wird die Erfindung anhand der Zeichnung beispielsweise näher erläutert. Fig.1 zeigt schematisch den Aufbau eines Kommunikationssystems zur Übertragung von vertraulichen und nicht vertraulichen Informationen bzw. Datensätzen. Fig.2 zeigt schematisch eine Eingabeeinheit für vertrauliche Information. Fig.3 zeigt eine Eingabeeinheit für nicht vertrauliche Information. Fig.4 zeigt schematisch die Funktion des Datenverteilungssystems. Fig.5 zeigt eine Ausgabeeinheit für vertrauliche Information enthaltende Datensätze und Fig. 6 zeigt eine Ausgabeeinheit für nicht vertrauliche Information enthaltende Datensätze.

Die Trennung von vertraulicher von nicht vertraulicher Information erfolgt grundsätzlich auf der Basis von zwei Mechanismen:
Eindeutige Zuordenbarkeit des Merkmals vertraulich oder nicht vertraulich zu den zu übertragenden Datensätzen in allen Komponenten des Kommunikationssystems, insbesondere Sprachvermittlungssystems, und/oder
Ausreichende Überwachung sicherheitsrelevanter Vorgänge im System im speziellen bei der Konfiguration, der Parametrierung und im Betrieb.

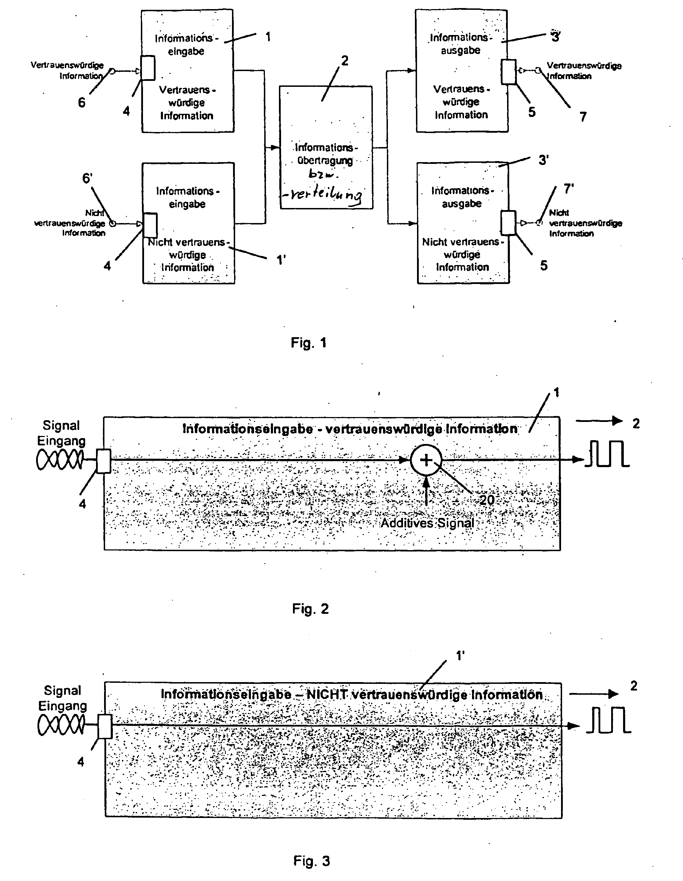

Für die Sicherstellung der Vertraulichkeit ist es notwendig den Pfad der Information innerhalb des Kommunikationssystems zu analysieren. Gemäß Fig.1 bestimmen folgende funktionalen Blöcke den Pfad:
Informationseingabe in das Kommunikationssystem an Eingabeeinheiten 1,1',
Informationsübertragung innerhalb des Kommunikationssystems über eine Datenverteilungseinheit 2,
Informationsausgabe aus dem Kommunikationssystem an Ausgabeeinheiten 3,3'.

Die Anzahl der Eingabeeinheiten 1 zur Aufgabe von vertraulichen Informationen enthaltenden Datensätzen sowie die Anzahl der Eingabeeinheiten 1' für die Eingabe von nicht vertraulichen Informationen enthaltenden Datensätzen kann beliebig gewählt werden. Jeder dieser Eingabeeinheiten 1, 1' ist ein A/D-Wandler 4 vorgeschaltet, an den die Benutzergeräte oder externe Einrichtungen angeschlossen sind. Hierbei kann es sich um Mikrofone, Telefone oder Schnittstellen zu anderen Übertragungseinrichtungen/netzen, insbesonders Sprachübertragungseinrichtungen, handeln. Bei den schützenswerten Kommunikationssystemen handelt es sich vor allem um Sprachübertragungssysteme. Allenfalls kann auch die Übertragung von Signalen und/oder Daten erfolgen. Mit den Datensätzen werden vor allem Bild- und/oder Sprachdaten übertragen.

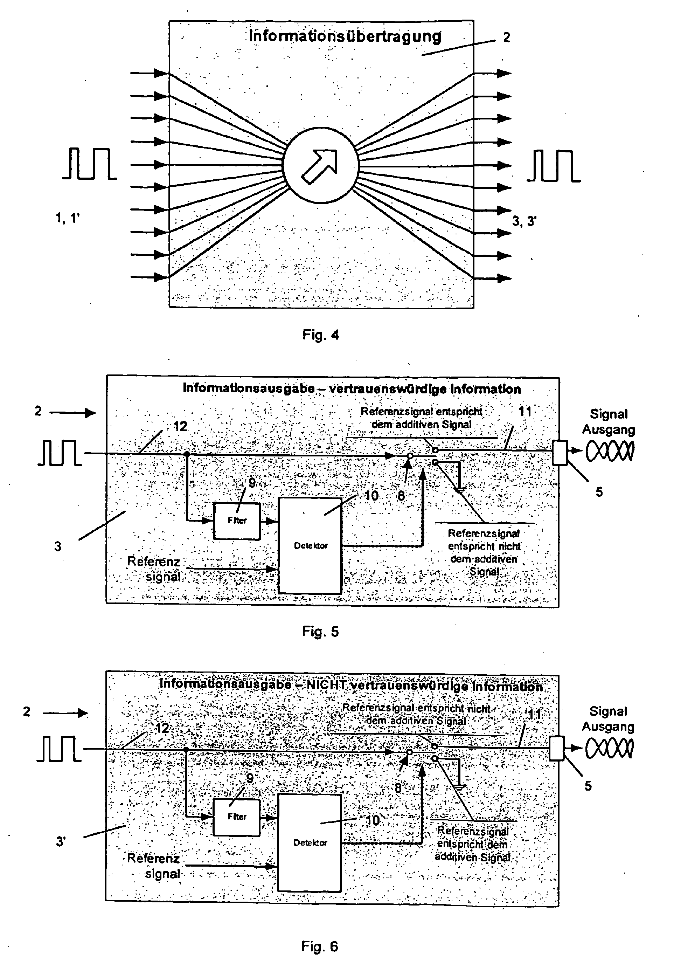

Die Eingabeeinheiten 1 und 1' sind an eine Datenverteifungseinheit 2 angeschlossen, das in Fig.4 näher dargestellt ist. Die Datenverteilungseinheit 2 sieht vor, dass von den Eingabeeinheiten 1 für vertrauliche Informationen erhaltene Datensätze an die gewr7nschte(n) Ausgabeeinheit(en) 3 für die Ausgabe von vertrauliche Informationen enthaltenden Datensätze weitergeleitet werden. Die Datenverteilungseinheit 2 sieht des weiteren vor, dass von Eingabeeinheiten 1' für nicht vertrauliche Informationen enthaltende Datensätzen einlangende Datensätze an die entsprechende(n) Ausgabeeinheit(en) 3' zur Ausgabe von nicht vertrauliche Informationen enthaltenden Datensätze weitergeleitet werden. Die Anzahl der Ausgabeeinheiten 3 und 3' kann ebenfalls beliebig gewählt werden.

Bei derartigen Kommunikationssystemen besteht unter anderem die Gefahr, dass in der Datenverteilungseinheit 2 Fehler auftreten und vertrauliche Information allenfalls an Ausgabeeinheiten von Teilnehmern weitergegeben wird, die eine Empfangsberechtigung nur für nicht vertrauliche Information besitzen. Ganz allgemein könnte aufgrund von Fehlern in der Datenverteilungseinheit 2 vertrauliche Information nicht nur an Ausgabeeinheiten für vertrauliche Information, sondern auch an Ausgabeeinheiten weitergeleitet werden, die zur Ausgabe von nicht vertraulichen Informationen bestimmt sind.

Es ist vorgesehen, dass über eine Datenverteilungseinheit 2, insbesondere einen Switch, die den Eingabeeinheiten 1 für vertrauliche Datensätze aufgegebenen, vertrauliche Informationen enthaltenden Datensätze an die Ausgabeeinheiten 3 für vertrauliche Informationen enthaltende Datensätze und die den Eingabeeinheiten 1' für nicht vertrauliche Datensätze aufgegebenen, nicht vertrauliche Informationen enthaltenden Datensätze an die Ausgabeeinheiten 3' für nicht vertrauliche Informationen enthaltende Datensätze weitergeleitet werden, und dass die beiden Arten von Datensätzen unterschiedlich markiert werden und die unterschiedlich markierten Datensätze in dieser Form über das Datenverteilungssystem 2 an die der Markierung nach der jeweiligen Eingabeeinheit zugeordnete Ausgabeeinheit 3, 3' weitergeleitet werden. Ferner werden die eine Art der aufgegebenen Datensätze, d.h. entweder die vertraulichen oder die nicht vertraulichen Datensätze, in den jeweiligen, für die Aufgabe dieser Art von Datensätzen vorgesehenen Eingabeeinheiten 1, 1' mit einem additiven Datensignal versehen bzw. beaufschlagt und diese mit dem additiven Datensignal beaufschlagte bzw. gekennzeichnete Art der Datensätze wird in dieser Form über eine Datenverteilungseinheit 2 an die der Art nach der jeweiligen Eingabeeinheit zugeordneten Ausgabeeinheiten 3, 3' weitergeleitet. Das additive Datensignal ist eine Spannung, insbesondere ein vorgegebener Gleichspannungswert.

Zweckmäßig werden die den Eingabeeinheiten 1 für vertrauliche Datensätze aufgegebenen Datensätze mit einem additiven Datensignal versehen. Einsprechend dieser Vorgangsweise ist in Fig. 2 eine Eingabeeinheit 1 für vertrauliche Information dargestellt. Dem einlangenden Datensignal, insbesondere Sprachsignal, wird nach dessen Digitalisierung ein additives Datensignal hinzugefügt und das resultierende Signal wird über die Datenvetteilungseinheit 2 an den gewünschten Teilnehmer bzw. dessen Ausgabeeinheit übertragen. Dieses additive Signal haftet der Information an ohne den Informationsinhalt zu verändern. Das Vorhandensein eines derartigen additiven Datensignals kennzeichnet innerhalb des gesamten Kommunikationssystems bzw. innerhalb der Datenverteilungseinheit 2 eindeutig die Information als vertraulich.

Fig.3 zeigt schematisch die Situation bei den Eingabeeinheiten 1' für nicht vertrauliche Informationen enthaltende Datensätze. Die bei den A/D-Wandier 4 ankommenden Datensignale werden in diese Fall ohne Veränderung durch die Eingabeeinheit 1' der Datenverteilungseinheit 2 zugeführt.

Die am Signaleingang ankommenden, nicht vertrauliche Information enthaltenden Datensätze, werden in der Informationseingabe (Fig. 1) ohne Veränderung durchgeschaltet.

Das Fehlen des additiven Signals kennzeichnet in diesem Fall innerhalb des Kommunikationssystems eindeutig die Information als nicht vertraulich.

Es kann vorgesehen sein, dass die den Eingabeeinheiten 1 für vertrauliche Datensätze aufgegebenen Datensätze mit dem additiven Datensignal versehen werden. Alternativ ist es möglich, die andere Art der Datensätze nämlich die nicht vertrauliche Informationen enthaltenden Datensätze mit dem additiven Datensignal zu verknüpfen.

Die Datenverteilungseinheit 2 verbindet prinzipiell jede vorhandene Eingabeeinheit 1 bzw. 1' mit jeder der vorhandenen Ausgabeeinheit 3, 3'; Von Vorteil ist es jedoch, wenn durch die Datenverteilungseinheit 2 an für vertrauliche Datensätze vorgesehenen Ausgabeeinheiten ausschließlich vertrauliche Informationen enthaltende Datensätze und an Ausgabeeinheiten für nicht vertrauliche Informationen ausschließlich nicht vertrauliche Informationen enthaltende Datensätze weitergeleitet werden.

Innerhalb der Informationsübertragung bzw. der Datenverteilungseinheit 2 werden die Informationen von den Eingangseinheiten 1,1' auf beliebige Ausgangseinheiten 3, 3' geschaltet. Weder die Information noch das additive Signal werden dabei verändert.

Fig.5 zeigt eine Ausgabeeinheit 3 für vertrauliche Information. Der von der Datenverteilungseinheit 2 einlangende Datensatz wird, z.B. über eine Leitung 12, einer Umschalteinheit 8 zugeführt. Des weiteren wird der einlangende digitale Datensatz einem Filter 9 zugeführt und im Hinblick auf das Vorhandensein des additiven Datensignals untersucht. Dem Detektor 10 ist dazu ein Referenzsignal zugeführt oder vorgegeben, das dem additiven Datensignal entspricht. Der Detektor 10 vergleicht das Ausgangsignal des Filters 9 mit dem Referenzsignal. Soferne das Ausgangsignal des Filters 9 dem Referenzsignal entspricht, wird dies im vorliegenden Fall als Einlangen eines vertrauliche Informationen enthaltenden Datensatzes gewertet und damit wird der Umschalter 8 auf die Ausgangsleitung 11 gelegt, sodass der am Umschalter 8 liegende Datensatz über den D/A-Wandler 5 an den Empfänger abgegeben werden kann. Das überlagerte additive Datensignal könnte zwar wieder entfernt bzw. subtrahiert werden; es zeigte sich jedoch, dass in der Praxis das überlagerte additive Datensignal für die Empfangsqualität keine Rolle spielt und demzufolge der mit dem additiven Datensignal überlagerte Datensatz dem Empfänger zur Verfügung gestellt werden kann.

Für den Fall, dass im Detektor 10 festgestellt wird, dass ein additives Datensignal im Ausgangsignal des Filters 9 nicht enthalten ist, schaltet der Detektor 10 den Umschalter 8 in die Sperrstellung bzw. in eine Stellung zur Unterdrückung des einlangenden Datensatzes, indem beispielsweise die Datenleitung 12 an Erde gelegt wird.

Die am Eingang der Informationsausgabe (Fig. 1) für vertrauliche Informationen ankommende Information wird somit in Abhängigkeit des Vorhandenseins des additiven Datensignals auf den Signalausgang der jeweiligen Ausgabeeinheit durchgeschaltet. Der Datensatz wird dabei in solcher Art gefiltert, dass das Filterausgangssignal eindeutig mit dem Referenzsignal verglichen werden kann. Stimmen Referenzsignal und gefiltertes Signal überein, so wird die DurChschaltung des Datensatzes an den Ausgang der Informationsausgabe vorgenommen. Stimmen Referenzsignal und gefiltertes Signal nicht überein, so wird der Signalausgang mit keinem Signal belegt. Im energielosen Zustand ist das Eingangsignal nicht auf den Signalausgang durchgeschaltet.

Es ist zweckmäßig, wenn die Informationen in Datensätzen übertragen werden, die gleichstromanteilsfrei sind. Vorteilhaft ist es dazu, wenn die Datensätze HDB3-codiert bzw. mit einem gleichstromanteilsfreien Code codiert sind. In diesem Fall ist es auch vorteilhaft, wenn als additives Datensignal eine Spannung, insbesondere ein vorgegebener Gleichspannungswert, dem Datensatz überlagert wird. Die Länge der Datensätze ist vom Prinzip her frei wählbar.

Des Weiteren ist es von Vorteil, wenn die Eingabeeinheiten 1, 1', insbesondere Schnittstellen, und die Ausgabeeinheiten 3, 3', insbesondere Schnittstellen, zur Eingabe bzw. Ausgabe von vertrauliche Informationen enthaltenden und von nicht vertrauliche Informationen enthaltenden Datensätzen physikalisch voneinander getrennt sind.

In gleicher Weise können die einlangenden Datensätze überprüft bzw. durchgeschaltet oder unterdrückt werden, wenn es sich um nicht vertrauliche Information enthaltende Datensätze handelt, die mit dem additiven Datensignal zur Unterscheidung von vertrauliche Information enthaltenden Datensätzen gekennzeichnet wurden.

Fig.6 zeigt eine Ausgabeeinheit 3' für im vorliegenden Fall nicht vertrauliche Informationen enthaltende Datensätze.

Im Prinzip sind die Ausgabeeinheiten 3 und 3' ident aufgebaut; lediglich die Funktion des Detektors 10, der den Umschalter 8 steuert, ist einzustellen dahingehend, dass je nach Wunsch entweder mit dem additiven Datensignal verknüpfte Datensätze zur Ausgangsschnittstelle bzw. zum Empfänger durchgeschaltet werden oder unterdrückt, z.B. geerdet, werden.

Die am Eingang der lnformationsausgabe (Fig. 1) für nicht vertrauliche Information aufgegebenen Datensätze werden in Abhängigkeit des Vorhandenseins des additiven Datensignals auf den Signalausgang durchgeschaltet. Das Informationssignal bzw. der Datensatz wird dabei in solcher Art gefiltert, das Filterausgangssignal eindeutig mit dem Referenzsignal verglichen werden kann. Stimmen Referenzsignal und gefiltertes Informationssignal überein, so wird die Durchschaltung des Datensatzes an den Ausgang verhindert bzw, der Ausgang mit keinem Signal belegt. Stimmen Referenzsignal und gefiltertes Informationssignal nicht überein, so wird der Signalausgang mit dem Signal des Eingangs belegt. Im energielosen Zustand ist das Eingangsignal nicht auf den Signalausgang durchgeschaltet.

Um die Übertragung für Informationen bzw. Datensätzen zwischen Teilnehmern in beiden Richtungen vornehmen zu können, ist ein Kommunikationssystem, so wie es in Fig.1 dargestellt ist, nochmals vorzusehen. Das in Fig.1 dargestellte Kommunikation erlaubt eine Kommunikation in eine Richtung die in Fig.1 von links nach rechts verläuft. Um einen Datentransport in die umgekehrte Richtung zu ermöglichen, ist das in Fig.1 dargestellte Kommunikationssystem nochmals in seitenverkehrter Anordnung vorzusehen.

An die Eingangseinheiten 1, 1' und die Ausgabeeinheiten 3, 3' sind z.B. Telefone 6, 6', 7, 7', Lautsprecher und Mikrofone, Computer oder Schnittstellen zu anderen Übertragungseinrichtungen bzw. -netzen angeschlossen.

Jeder Datensatz wird mit dem additiven Datensignal versehen, insbesondere wird jeder Datensatz in seiner Gesamtheit mit dem Datensignal beaufschlagt. Header und Transportdaten und für die Übermittlung der Datensätze erforderliche Daten und Signale bleiben unberührt. Das aufgebrachte Spannungssignal ist vorteilhafterweise ein positiver oder negativer Spannungswert.

Die Höhe des Spannungswertes des additiven Datensignals ist wählbar und hängt von der Art der für die Informationsübertragung eingesetzten Datensätze ab.

Die Erfindung betrifft ferner einen Datenträger, auf dem ein Programm zur Durchführung des erfindungsgemäßen Verfahrens gespeichert ist.

## Patentansprüche

1. Verfahren zur Übertragung von vertraulichen und nicht vertraulichen Datensätzen zwischen Eingabeeinheiten (1, 1') und Ausgabeeinheiten (3, 3') von Kommunikationssystemen, wobei das Kommunikationssystem Eingabeeinheiten (1) für vertrauliche Datensätze und Eingabeeinheiten (1') für nicht vertrauliche Datensätze und Ausgabeeinheiten (3) für vertrauliche Datensätze und Ausgabeeinheiten (3') für nicht vertrauliche Datensätze umfasst.
- wobei über eine Datenverteilungseinheit (2), die den Eingabeeinheiten (1) für vertrauliche Datensätze aufgegebenen, vertrauliche Informationen enthaltenden Datensätze an die Ausgabeeinheiten (3) für vertrauliche Informationen enthaltende Datensätze und die den Eingabeeinheiten (1') für nicht vertrauliche Datensätze aufgegebenen, nicht vertrauliche Informationen enthaltenden Datensätze an die Ausgabeeinheiten (3') für nicht vertrauliche Informationen enthaltende Datensätze weitergeleitet werden, und
- wobei die beiden Arten von Datensätzen unterschiedlich markiert werden und die unterschiedlich markierten Datensätze in dieser Form über die Datenverteilungseinheit (2) an die der Markierung nach der jeweiligen Eingabeeinheit zugeordnete Ausgabeeinheit (3, 3') weitergeleitet wird, **dadurch gekennzeichnet, dass** die eine Art der aufgegebenen Datensätze, d.h. entweder die vertraulichen oder die nicht vertraulichen Datensätze, in den jeweiligen, für die Aufgabe dieser Art von Datensätzen vorgesehenen Eingabeeinheiten (1, 1') mit einem vorgegebenen additiven Gleichspannungswert beaufschlagt wird und diese mit dem additiven Gleichspannungswert beaufschlagte Art der Datensätze in dieser Form über die Datenverteilungseinheit (2) an die der Art nach der jeweiligen Eingabeeinheit zugeordneten Ausgabeeinheiten (3, 3') weitergeleitet wird.

2. Verfahren nach Anspruch 1, **dadurch gekennzeichnet, dass** die den Eingabeeinheiten (1) für vertrauliche Datensätze aufgegebenen, vertrauliche Information enthaltenden Datensätze mit dem additiven Gleichspannungswert beaufschlagt werden.

3. Verfahren nach Anspruch 1 oder 2, **dadurch gekennzeichnet, dass** an für vertrauliche Datensätze vorgesehenen Ausgabeeinheiten (3) ausschließlich vertrauliche Informationen enthaltende Datensätze und an Ausgabeeinheiten (3') für nicht vertrauliche Informationen enthaltende Datensätze ausschließlich nicht vertrauliche Informationen enthaltende Datensätze zur Ausgabe zugelassen werden.

4. Verfahren nach einem der Ansprüche 1 bis 3, **dadurch gekennzeichnet, dass** in jeder Ausgabeeinheit (3, 3') die von der Datenverteilungseinheit (2) einlangenden Datensätze auf eine Beaufschlagung mit dem additiven Gleichspannungswert überprüft werden und In Abhängigkeit von der Überprüfung diese Datensätze zur Ausgabe zugelassen oder unterdrückt werden.

5. Verfahren nach einem der Ansprüche 1 bis 4, **dadurch gekennzeichnet, dass** die Eingabeeinheiten (1, 1') und die Ausgabeeinheiten (3, 3') zur Eingabe bzw. Ausgabe von vertrauliche Informationen enthaltenden und von nicht vertrauliche Informationen enthaltenden Datensätzen physikalisch voneinander getrennt sind.

6. Verfahren nach einem der Ansprüche 1 bis 5, **dadurch gekennzeichnet, dass** die Datensätze HDB3-codiert bzw. mit einem gleichstromanteilsfreien Code codiert sind.

7. Verfahren nach einem der Ansprüche 1 bis 6, **dadurch gekennzeichnet,**
- **dass** in jeder Ausgabeeinheit (3, 3') eine Filterung aller von der Datenverteilungseinheit (2) einlangenden Datensätze erfolgt,
- **dass** das durch die Filterung erhaltene Signal mit einem Referenzsignal verglichen wird, das dem additiven Gleichspannungswert entspricht, und
- **dass** in Abhängigkeit des Vergleichs eine Ausgabe des jeweiligen Datensatzes erfolgt oder dieser Datensatz unterdrückt wird.

8. Kommunikationssystem bzw. -einrichtung zur Übertragung von vertraulichen und nicht vertraulichen Datensätzen zwischen Eingabeeinheiten (1, 1') und Ausgabeeinheiten (3. 3'), wobei das Kommunikationssystem Eingabeeinheiten (1) für vertrauliche Datensätze und Eingabeeinheiten (1') für nicht vertrauliche Datensätze und Ausgabeeinheiten (3) für vertrauliche Datensätze und Ausgabeeinheiten (3') für nicht vertrauliche Datensätze umfasst, insbesondere zur Durchführung des Verfahrens nach einem der Ansprüche 1 bis 7,
- wobei an die Eingabeeinheiten (1) für vertrauliche Datensätze und an die Eingabeeinheiten (1') für nicht vertrauliche Datensätze eine Datenverteilungseinheit (2) angeschlossen Ist, an die die Ausgabeeinheiten (3) für vertrauliche Informationen enthaltende Datensätze und die Ausgabeeinheiten (3') für nicht vertrauliche Informationen enthaltende Datensätze angeschlossen sind, **dadurch gekennzeichnet,**
- **dass** die Eingabeeinheiten (1, 1'), die für die Aufgabe der einen Art von Datensätzen vorgesehen sind, jeweils eine Verknüpfungseinheit (20) aufweisen, welche die aufgegebenen Datensätze mit einem additiven Gleichspannungswert beaufschlagt, und
- **dass** die Datenvertellungseinheit (2) so ausgestaltet ist, dass diese mit dem additiven Gleichspannungswert beaufschlagte Art der Datensätze in dieser Form an die der jeweiligen Eingabeeinheit (1, 1') der Art nach zugeordnete(n) Ausgabeeinheit(en) (3, 3') weitergeleitet werden.

9. System nach Anspruch 8, **dadurch gekennzeichnet, dass** die Verknüpfungseinheiten (20) In den Eingabeeinheiten (1) für vertrauliche Datensätze vorgesehen sind.

10. System nach Anspruch 8 oder 9, **dadurch gekennzeichnet, dass** die Ausgabeeinheiten (3, 3') Prüfeinheiten (9, 10) für die einlangenden Datensätze aufweisen, die bei für vertrauliche Datensätze vorgesehenen Ausgabeeinheiten (3) ausschließlich vertrauliche Informationen enthaltende Datensätze und bei Ausgabeeinheiten (3') für nicht vertrauliche Informationen enthaltende Datensätze ausschließlich nicht vertrauliche Informationen enthaltende Datensätze zur Ausgabe zulassen.

11. System nach einem der Ansprüche 8 bis 10, **dadurch gekennzeichnet, dass** die Eingabeeinheiten (1) und die Ausgabeeinheiten (1') zur Eingabe bzw. Ausgabe von vertrauliche Informationen enthaltenden und von nicht vertrauliche Informationen enthaltenden Datensätzen physikalisch voneinander getrennt angeordnet sind.

12. System nach einem der Ansprüche 8 bis 11, **dadurch gekennzeichnet, dass** die Datensätze HDB3-codiert bzw. mit einem gleichstromanteilsfreien Code codiert sind.

13. System nach Anspruch 10, **dadurch gekennzeichnet,**
- **dass** jede Prüfeinheit einen Filter (9) für die von der Datenverteilungseinheit (2) einlangenden Datensätze aufweist,
- **dass** an den Filter (9) eine Vergleichseinheit (10) angeschlossen ist, in der das durch die Filterung erhaltene Signal mit einem Referenzsignal verglichen wird, das dem additiven Gleichspannungswert entspricht, und
- **dass** jede Ausgabeeinheit (3, 3') derart ausgestaltet ist, dass in Abhängigkeit des Vergleiches eine Ausgabe des jeweiligen Datensatzes erfolgt oder dieser Datensatz unterdrückt wird.

14. System nach einem der Ansprüche 10 bis 13, **dadurch gekennzeichnet, dass** jede Prüfeinheit (9, 10) einen Umschalter (8) steuert, derart, dass mit dem in der Ausgabeeinheit (3, 3') einlangende Datensätze abhängig vom Prüfungsergebnis an den Ausgang der Ausgabeeinheit (3, 3') geführt oder unterdrückt und zur Ausgabe nicht zugelassen werden.

15. System nach einem der Ansprüche 7 bis 14, **dadurch gekennzeichnet, dass** die Datenverteilungseinheit (2) von einem Switch gebildet ist.

16. System nach einem der Ansprüche 10 bis 15. **dadurch gekennzeichnet, dass** jede Prüfeinheit (9, 10) derart ausgestaltet ist, dass sie die von der Datenverteilungseinheit (2) einlangenden Datensätze auf eine Beaufschlagung mit dem additiven Gleichspannungswert überprüft und in Abhängigkeit von der Überprüfung diese Datensätze zur Ausgabe zulässt oder unterdrückt.

17. Datenträger, **dadurch gekennzeichnet, dass** auf ihm ein Programm zur Ausführung des in den Ansprüchen 1 bis 7 beanspruchten Verfahrens gespeichert ist.

## Claims

1. Process for transmitting confidential and non-confidential data sets between input units (1, 1') and output units (3, 3') of communication systems, said communication system comprising input units (1) for confidential data sets and input units (1') for non-confidential data sets as well as output units (3) for confidential data sets and output units (3') for non-confidential data sets,
- a data distribution unit (2) being used for transmitting data sets containing confidential information, which are input via the input units (1) for confidential data sets, to the output units (3) for confidential information and for transmitting data sets containing non-confidential information, which are input via the input units (1') for non-confidential data sets, to the output units (3') for non-confidential information, and
- the two different types of data sets being differently labeled, said differently labeled data sets being transmitted via the data distribution unit (2) to the output unit (3, 3') which is assigned to the respective input unit, based on their labels, **characterized in that** a predetermined additive d.c. voltage value is applied to one type of input data sets, i.e. either the confidential or non confidential data sets, in the input units (1,1') provided for inputting the respective type of data sets and **in that** said type of data sets to which an additive d.c. voltage is applied is transmitted via the data distribution unit (2) to the output units (3, 3') assigned to the respective type of input units.

2. The process according to claim 1, **characterized in that** said additive d.c. voltage value is applied to data sets containing confidential information, which are input at the input units (1) for confidential data sets.

3. The process according to claim 1 or 2, **characterized in that** only data sets containing confidential information are output at output units (3) provided for confidential data sets, while only data sets containing non-confidential information are output at output units (3') for non-confidential-data sets.

4. The process according to any one of the claims 1 to 3, **characterized in that** each output unit (3, 3') checks whether an additive d.c. voltage value is applied to the data sets received from the distribution unit (2), depending on the results of said check, said data sets are admitted to be output or rejected.

5. The process according to any one of the claims 1 to 4, **characterized in that** the input units (1, 1') and the output units (3, 3') for inputting and outputting data sets containing confidential information or non-confidential information are physically separated from one another.

6. The process according to any one of the claims 1 to 5, **characterized in that** the data sets are HDB3 encoded or encoded using a code without any d.c. components.

7. The process according to any one of the claims 1 to 6, **characterized in**
- **that** each output unit (3, 3') filters all data sets received from the data distribution unit (2),
- **that** the signal obtained by the filtering process is compared to a reference signal which corresponds to the additive d.c. voltage value, and
- **that**, depending on the result of said comparison, the respective data set is output or rejected.

8. A communication system or installation for transmitting confidential and non-confidential data sets between input units (1, 1') and output units (3, 3'), said communication system comprising input units (1) for confidential data sets and input units (1') for non-confidential data sets as well as output units (3) for confidential data sets and output units (3') for non-confidential data sets, particularly for implementing the process according to any one of the claims 1 to 7,
- a data distribution unit (2) to which the output units (3) for data sets containing confidential information and the output units (3') for data sets containing non-confidential information are connected being connected to the input units (1) for data sets containing confidential information and the input units (1') for data sets containing non-confidential information, **characterized in**
- **that** the input units (1, 1') provided for inputting one type of data sets each have an interconnection unit (20) applying an additive d.c. voltage value to the input data sets,
and
- **that** the data distribution unit (2) is configured to transmit the type of data sets to which the additive d.c. voltage value is applied as such to the output unit(s) (3, 3') assigned to the respective input unit (1, 1').

9. The system according to claim 8, **characterized in that** the interconnection units (20) are provided in the input units (1) for confidential data sets.

10. The system according to claim 8 or claim 9, **characterized in that** the output units (3, 3') comprise checking units (9, 10) for the received data sets which only admit data sets containing confidential information to output units (3) for confidential data sets and only admit data sets containing non-confidential information to output units (3') for data sets containing non-confidential information.

11. The system according to claim 8 to 10, **characterized in that** the input units (1) and the output units (3) for inputting and outputting data sets containing confidential information and data sets containing non-confidential information, respectively, are disposed physically separated from one another.

12. The system according to any one of the claims 8 to 11, **characterized in that** the data sets are HDB3 encoded or encoded using a code without any d.c. components.

13. The system according to claim 10, **characterized in**
- **that** each checking unit has a filter (9) for the data sets received from the data distribution unit (2),
- **that** a comparing unit (10), in which the signal resulting from the filtering is compared to a reference signal corresponding to the additive d.c. voltage value, is connected to the filter (9), and
- **that** each output unit (3, 3') is configured to either output a data set or to reject a data set, based on the result obtained by the comparison.

14. The system according to any one of the claims 10 to 13, **characterized in that** each checking unit (9, 10) controls a switch (8), so that data sets received by the output units (3, 3') are either transmitted to the output of the output unit (3, 3') or rejected and not permitted to be output, depending on the result obtained by the check.

15. The system according to any one of the claims 7 to 14, **characterized in that** the data distribution unit (2) is formed by a switch.

16. The system according to any one of the claims 10 to 15, **characterized in that** each checking unit (9, 10) is configured to check whether an additive d.c. voltage value is applied to the data sets received from the data distribution unit (2) and to permit the output of said data sets or to reject them based on the result obtained by the check.

17. Data carrier, **characterized in that** a program for executing the process claimed in claims 1 to 7 is saved thereon.

## Revendications

1. Procédure de transmission de paquets de données confidentielles et non confidentielles entre des unités d'entrée (1, 1') et des unités de sortie (3, 3') de systèmes de communication, ledit système de communication comprenant des unités d'entrée (1) pour des paquets de données confidentielles et des unités d'entrée (1') pour des paquets de données non confidentielles ainsi que des unités de sortie (3) pour des paquets de données confidentielles et des unités de sortie (3') pour des paquets de données non confidentielles,
- une unité de distribution de données (2) étant utilisée pour transmettre des paquets de données, contenant des informations confidentielles, qui sont entrés via les unités d'entrée (1) pour des paquets de données confidentielles, aux unités de sortie (3) pour des informations confidentielles et pour transmettre des paquets de données, contenant des informations non confidentielles, qui sont entrés via les unités d'entrée (1') pour des paquets de données non confidentielles, aux unités de sortie (3') pour des informations non confidentielles, et
- les deux types de paquets de données étant marqués différemment, lesdits paquets de données marqués différemment étant transmis via l'unité de distribution de données (2) à l'unité de sortie (3, 3') qui est attribué à l'unité d'entrée respective en fonction de leurs marqueurs respectifs, **caractérisée en ce qu'**un type de paquets de données entrés, à savoir les paquets de données confidentielles ou non confidentielles, est chargé d'une tension continue additive dans les unités d'entrée (1, 1') respectives, prévues pour l'entrée de ce type de paquets de données, et **en ce que** ledit type de paquets de donnés, qui est chargé d'une tension continue additive, est transmis aux unités de sortie (3, 3') attribués au type respectif d'unité d'entrée (1, 1') via l'unité de distribution (2).

2. Procédure selon la revendication 1, **caractérisée en ce que** des paquets de données contentant des informations confidentielles, qui sont entrés via les unités d'entrée (1), sont chargés de ladite tension continue additive.

3. Procédure selon la revendication 1 ou 2, **caractérisée en ce qu'**il ne sont que les paquets de données contenant des informations confidentielles qui sont sortis aux unités de sortie (3) pour les paquets de données confidentielles, pendant qu'il ne sont que les paquets de données contenant des informations non confidentielles qui sont sortis aux unités de sortie (3') pour les paquets de données non confidentielles

4. Procédure selon l'une des revendications 1 à 3, **caractérisée en ce que** chaque unité de sortie (3, 3') contrôle si les paquets de donnés qu'elle reçoit de l'unité de distribution (3) sont chargés d'une tension continue additive et **en ce que** lesdits paquets de données sont admis à la sortie ou rejetés en fonction des résultats dudit contrôle.

5. Procédure selon l'une des revendications 1 à 4, **caractérisée en ce que** les unités d'entrée (1, 1') et les unités de sortie (3, 3') pour l'entrée et la sortie de paquets de données qui contiennent des informations confidentielles ou non confidentielles sont physiquement séparées.

6. Procédure selon l'une des revendications 1 à 5, **caractérisée en ce que** les paquets de données sont codés en HDB3 ou en un code sans des composantes de courant continu.

7. Procédure selon l'une des revendications 1 à 6, caractérisée en ce
- que chaque unité de sortie (3 3') filtre tous les paquets de données qu'elle reçoit de l'unité de distribution de données (2),
- que le signal obtenu par le filtrage est comparé avec un signal de référence qui correspond à la tension continue additive, et
- que le paquet de données respectif est sorti ou rejeté en fonction du résultat de ladite comparaison.

8. Système ou installation de communication pour la transmission de paquets de données confidentielles et non confidentielles entre des unités d'entrée (1, 1') et des unités de sortie (3, 3'), ledit système de communication comprenant des unités d'entrée (1) pour des paquets de données confidentielles et des unités d'entrée (1') pour des paquets de données non confidentielles ainsi que des unités de sortie (3) pour des paquets de données confidentielles et des unités de sortie (3') pour des paquets de données non confidentielles, notamment pour l'implémentation d'une procédure selon l'une des revendications 1 à 7,
- une unité de distribution de données (2), qui est reliée aux unités d'entrée (1) pour les paquets de données confidentielles et aux unités d'entrée (1') pour les paquets de données non confidentielles, étant reliée aux unités de sortie (3) pour les paquets de données confidentielles et aux unités de sortie (3') pour les paquets de données non confidentielles caractérisé/e en ce
- que chacune des unités d'entrée (1, 1'), qui sont prévus pour entrer un type de paquets de données, a une unité de raccord (20) qui charge les paquets de données entrés d'une tension continue additive et
- que l'unité de distribution de données (2) est configurée pour transmettre le type de données qui est chargé de ladite tension continue additive à l'unité de sortie/aux unités de sortie (3, 3') attribué/s à l'unité d'entrée (1, 1') respectif.

9. Système selon la revendication 8, **caractérisé en ce que** les unités de raccord (20) sont prévues dans les unités d'entrée (1) pour des paquets de données confidentielles.

10. Système selon la revendication 8 ou 9, **caractérisé en ce que** les unités de sortie (3, 3') comprennent des unités de contrôle (9, 10) pour les paquets de données reçus, lesdits unités de contrôle (9, 10) n'admettant que les paquets de données confidentielles aux unités de sortie (3) pour les paquets de données confidentielles et n'admettant que les paquets de données non confidentielles aux unités de sortie (3') pour les paquets de données non confidentielles.

11. Système selon l'une des revendications 8 à 10, **caractérisé en ce que** les unités d'entrée (1) et les unités de sortie (3) pour l'entrée et la sortie des paquets de données contentant des informations confidentielles ou non confidentielles sont physiquement séparées.

12. Système selon l'une des revendications 8 à 11, **caractérisé en ce que** les paquets de données sont codés en HDB3 ou en un code sans des composantes de courant continu.

13. Système selon la revendication 10, **caractérisé en ce**
- **que** chacune des unités de contrôle a un filtre (9) pour filtrer les paquets de données reçus de l'unité de distribution de données (2),
- **qu'**une unité de comparaison (10), dans laquelle le signal obtenu par le filtrage est comparé à un signal de référence qui correspond à la tension continue additive, est reliée au filtre (9), et
- **que** chacune des unités de sortie (3, 3') est configurée pour sortir un paquet de données ou pour le rejeter, en fonction du résultat de la comparaison.

14. Système selon l'une des revendications 10 à 13, **caractérisé en ce que** chacune des unités de contrôle (9, 10) contrôle un commutateur (8) ainsi que, en fonction des résultats du contrôle, les paquets de données reçus par les unités de sortie (3, 3') sont transmis à la sortie de l'unité de sortie (3, 3') ou rejetés sans être admis à la sortie.

15. Système selon l'une des revendications 7 à 14, **caractérisé en ce que** l'unité de distribution de données (2) est formée par un commutateur.

16. Système selon l'une des revendications 10 à 15, **caractérisé en ce que** chacune des unités de contrôle (9, 10) est configurée pour contrôler si les paquets de données reçus de l'unité de distribution de données (2) sont chargés d'une tension continue additive et pour admettre lesdits paquets de données à la sortie ou pour les rejeter, en fonction du résultat du contrôle.

17. Support de données, **caractérisé en ce qu'**une programme pour exécuter la procédure revendiquée selon les revendications 1 à 7 est enregistrée dessus.
